Europäisches Patentamt

European Patent Office

Office européen des brevets

(11) Veröffentlichungsnummer: **0 175 876**
**A2**

(12) **EUROPÄISCHE PATENTANMELDUNG**

(21) Anmeldenummer: **85109322.9**

(22) Anmeldetag: **25.07.85**

(51) Int. Cl.⁴: **H 01 G 1/13**
**H 01 G 1/10**

(30) Priorität: **28.08.84 DE 3431619**

(43) Veröffentlichungstag der Anmeldung:
**02.04.86 Patentblatt 86/14**

(84) Benannte Vertragsstaaten:
**AT BE CH DE FR GB IT LI NL SE**

(71) Anmelder: **Siemens Aktiengesellschaft**
**Berlin und München Wittelsbacherplatz 2**
**D-8000 München 2(DE)**

(72) Erfinder: **Wehnelt, Ulrich, Dipl.-Phys.**
**Am Langenberg 2**
**D-8130 Starnberg(DE)**

(54) **Umhülltes elektrisches Bauelement.**

(57) Elektrisches Bauelement, insbesondere Rohrkondensator, Durchführungskondensator oder Durchführungsfilter, mit einem keramischen Dielektrikum, auf dem die Kondensatorelektroden aufgebracht sind. An den Stirnflächen bzw. den Belagkanten ergeben sich hohe Feldstärken, die zu hohen Kriechströmen und auch zum Spannungsüberschlag führen können. Mittels eines dreischichtigen Lackaufbaus wird die kritische Feldstärke verringert, wobei als unterste Schicht eine vergleichsweise dünne Schicht aus einem Lack verwendet wird, der mit einer Substanz hoher Dielektrizitätskonstante gefüllt ist. Die darauf angeordnete zweite Lackschicht ist vergleichsweise dick und entspricht in ihrer Zusammensetzung der ersten Lackschicht. Als dritte Lackschicht wird ein mechanisch und elektrisch hochwertiges Material mit niedriger Dielektrizitätskonstante, insbesondere ungefülltes Epoxidharz in einer Dicke aufgetragen, die zwischen der der ersten und der der zweiten Lackschicht liegt.

Siemens Aktiengesellschaft          Unser Zeichen:
Berlin und München                  VPA 84 P 1 6 3 3 E

## Umhülltes elektrisches Bauelement

Die Erfindung betrifft ein elektrisches Bauelement entsprechend dem Oberbegriff des Anspruchs 1 und ein Verfahren zur Herstellung eines derartigen Bauelements.

Die moderne Entwicklung der Übertragungstechnik, insbesondere der Übergang zur digitalen Übertragungstechnik verschärfte die Anforderungen an in dieser Technik einsetzbare elektrische Bauelemente, da neben einem kompakten
mechanischen Aufbau eine Eignung über einen besonders
großen Frequenzbereich notwendig ist. Die Entwicklung digitaler Übertragungssysteme mit Bitraten von 565 Mbit/s
führte zu hohen Anforderungen an die in diesem System
verwendbaren keramischen Rohr- und Durchführungskondensatoren und die Durchführungsfilter. Derartige Bauelemente
werden beispielsweise an der Verbindungsstelle zwischen
dem Kupfer-Übertragungskabel und den Leitungsendgeräten
bzw. den Zwischenregeneratoren eingesetzt, so daß beispielsweise eine hohe Blitzschlaggefährdung zu berücksichtigen ist. Diese Bauelemente sind deshalb einerseits
hochspannungsfest und andererseits teilentladungsfrei bis
zu hohen Feldstärken auszuführen. Für digitale Systeme mit
niedrigen Übertragungsgeschwindigkeiten sowie analoge
Systeme wurden deshalb für Hochspannungsanwendungen bisher
ölgefüllte Papierkondensatoren eingesetzt, deren Eigeninduktivität mit der Steigerung der Übertragungsbitrate zunehmend stört.

Die Aufgabe der Erfindung besteht also darin, ein elektrisches Bauelement der eingangs erwähnten Art zu entwickeln, das bei niedriger Eigeninduktivität einerseits
hochspannungsfest und teilentladungsfrei bis zu hohen
Feldstärken ist. Die isolierende Umhüllung soll außerdem

Ah 1 Or / 13.8.1984

mechanisch fest, feuchtedicht, wärmebeständig, chemikalienresistent und dabei leicht herstellbar sein.

Erfindungsgemäß wird die Aufgabe bei einem elektrischen Bauelement der eingangs erwähnten Art durch die im Kennzeichen des Patentanspruchs 1 angegebenen Maßnahmen gelöst. Zweckmäßige Weiterbildungen des elektrischen Bauelements nach der Erfindung sind in den Patentansprüchen 2 bis 5 näher beschrieben, während im Patentanspruch 6 ein vorteilhaftes Verfahren zur Herstellung eines derartigen Bauelementes angegeben ist.

Bei einem praktischen Ausführungsbeispiel wird von einem keramischen Rohrkörper ausgegangen, der aus einer sogenannten NDK-Masse mit einer relativen Dielektrizitätskonstante von 30 bis 120 oder aus einer sog. HDK-Masse mit einer Dielektrizitätskonstante zwischen 600 und 6000 besteht. Der Rohrkörper wird im Innenraum sowie auf der äußeren Oberfläche mit einer leitenden Schicht aus Silber oder einer Silber-Palladium-Legierung überzogen, wobei die innere Schicht auch den inneren Teil der Stirnflächen bedeckt, so daß nur ein äußerer Ring der Stirnflächen belagfrei bleibt. Im Bereich dieses Ringes ergeben sich hohe Feldstärken, die zu erhöhten Kriechströmen sowie zu Spannungsüberschlägen führen können. Auf die Stirnflächen und auf die äußere Fläche wird deshalb zunächst eine erste vergleichsweise sehr dünnflüssige Lackschicht aufgebracht, die mit einer Substanz hoher relativer Dielektrizitätskonstante gefüllt ist. Die Lackschicht weist eine Leitfähigkeit im Bereich von 1 bis 100 MOhm/cm auf und kann aus Phenolharz, Epoxidharz, Silikonharz oder einem Gemisch dieser Substanzen bestehen, wobei als Füllstoff ein schwach leitfähiges oder ein halbleitendes Material mit höherer Polarität als das der Lackschicht verwendet wird. Bevorzugte Füllstoffe sind fein zermahlene Keramik auf der Grundlage von Aluminiumdioxyd oder von Bariumtitanat. Durch die Dünnflüssigkeit des Lackes wird eine gute Haftfähigkeit an dem Rohrkörper sichergestellt und Hohlräume, insbesondere an den Belagkanten, vermieden.

Die erste Lackschicht wird mit einer zweiten, vergleichsweise dicken Lackschicht überzogen, wobei der gleiche Lack mit dem gleichen Füllstoff wie die bei der ersten Lackschicht mit allerdings höherer Viskosität verwendet wird. Durch diese vergleichsweise dicke Lackschicht ergibt sich eine gute Durchschlagsfestigkeit, wegen der Verwendung des gleichen Lackes ist die Haftfähigkeit zur ersten Lackschicht gut.

Zur Sicherung einer hohen Kriechstromfestigkeit wird auf die zweite Lackschicht eine dritte Lackschicht mit einer Dicke aufgetragen, die zwischen der der ersten und der der zweiten Lackschicht liegt. Als Material für die dritte Lackschicht wird ein mechanisch und elektrisch hochwertiges Material mit niedriger Dielektrizitätskonstante wie beispielsweise ungefülltes Epoxidharz verwendet. Durch diese dritte Lackschicht mit vergleichsweise niedriger Dielektrizitätskonstante werden Oberflächenentladungen an der zweiten Lackschicht mit hoher Dielektrizitätskonstante verhindert, außerdem wird der mechanische Schutz des Bauelementes gewährleistet.

Der mehrlagige Aufbau der Lackierung ist hauptsächlich an den Belagkanten, also an den Stellen hoher Feldstärke erforderlich, während andere Teile der äußeren Oberfläche beispielsweise wegen einer großflächigen Kontaktierung lackfrei sein können.

0175876

Patentansprüche

1. Elektrisches Bauelement, insbesondere Rohrkondensator, Durchführungskondensator oder Durchführungsfilter, mit einem keramischen Dielektrikum, das mit wenigstens einer leitenden Schicht belegt und wenigstens teilweise von ausgehärtetem Lack umhüllt ist, d a d u r c h g e k e n n z e i c h n e t , daß zumindest an den Kanten des auf dem Dielektrikum aufgebrachten Belages eine erste, mit einer Substanz hoher relativer Dielektrizitätskonstante gefüllte, vergleichsweise sehr dünnen Lackschicht aufgebracht ist, daß auf dieser eine zweite, vergleichsweise dicke Lackschicht aufgebracht ist, die materialmäßig der ersten Schicht entspricht, daß auf die zweite eine dritte Lackschicht vergleichsweise niedriger Dielektrizitätskonstante aber hoher mechanischer Festigkeit und hoher Kriechstromfestigkeit in einer Dicke aufgebracht ist, die zwischen der der ersten und der der zweiten Lackschicht liegt.

2. Elektrisches Bauelement nach Patentanspruch 1, d a - d u r c h g e k e n n z e i c h n e t , daß die erste und die zweite Lackschicht eine spezifische Leitfähigkeit von etwa 1 bis 100 MOhm/cm aufweisen.

3. Elektrisches Bauelement nach Patentansprüchen 1 und 2, d a d u r c h g e k e n n z e i c h n e t , daß die erste und zweite Lackschicht als Füllstoff ein schwach leitfähiges oder halbleitendes Material mit höherer Polarität als das der dritten Lackschicht enthalten.

4. Elektrisches Bauelement nach Patentansprüchen 1 bis 3, d a d u r c h g e k e n n z e i c h n e t , daß als Füllstoff für die erste und zweite Lackschicht eine Keramik auf der Basis von Aluminiumdioxyd, Bariumtitanat oder einer Mischung dieser Stoffe vorgesehen ist.

0175876

5. Elektrisches Bauelement nach Patentanspruch 1, d a - d u r c h   g e k e n n z e i c h n e t ,   daß als dritte Lackschicht ein ungefülltes Epoxidharz vorgesehen ist.

6. Verfahren zur Herstellung eines Bauelementes nach Patentansprüchen 1 bis 5, d a d u r c h   g e k e n n - z e i c h n e t ,   daß von einem rohrförmigen keramischen Dielektrikum ausgegangen wird, dessen Innenraum in Verbindung mit einem Teil der Stirnfläche sowie dessen Mantelfläche mit einer Schicht aus Silber oder Silberpaladium belegt ist, daß wenigstens an den Belagkanten mittels eines sehr dünnflüssigen Lackes die erste Lackschicht aufgebracht wird, daß nach derem An- oder Aushärten ein vergleichsweise dickflüssiger Lack zur Bildung der zweiten Lackschicht aufgebracht wird und daß nach deren An- oder Aushärtung eine dritte Lackschicht aus einem Lack von mittlerer Viskosität aufgebracht wird.